# EUROPEAN PATENT APPLICATION

(11) **EP 2 405 355 A2**
(43) Date of publication of application: **11.01.2012**
(21) Application number: 11167159.0
(22) Date of filing: 23.05.2011
(51) Int. Cl.: G06F 11/22

(54) **Information processing system and failure processing method therefor**

(30) Priority: 10.06.2010 JP 2010132898
(71) Applicant: FUJITSU LIMITED, Kawasaki-shi, Kanagawa 211-8588 (JP)
(72) Inventor: Sano, Koji, Kanagawa 211-8588 (JP)
(74) Representative: Ward, James Norman

(57) **Abstract**

An information processing system that processes received commands and data, the information processing system includes: an internal circuit that processes the received commands and data; a memory that stores the received commands and data as history; and a control circuit that reads the commands and data in the memory and outputs read commands and data to the internal circuit, in response to detection of a failure in the internal circuit.

## Description

### FIELD

The embodiments discussed herein are related to an information processing system and a failure processing method.

### BACKGROUND

Various technologies have been proposed for failure analysis in information processing systems. In the information processing system, in what situation a failure occurred can be analyzed through reference to log information (hereinafter referred to as "history information") of instructions executed in the vicinity of the failure.

In an information processing system, information, such as received commands, is written to a memory (referred to as a "history memory"), and writing to the history information is suppressed upon detection of a failure. Thereafter, in the information processing system, the history information written in the history information is read for analysis of the failure. An external apparatus may read the contents of the history memory so that the read contents are used for analysis. In addition, an internal circuit in the system may issue a test command to search for the portion of the failure.

Such analysis of the history information is performed through a simulation or by a technician of a system manufacturer or a service engineer.

Examples of related art include Japanese Laid-open Patent Publication Nos. 2006-012066 and 2005-284549.

Analysis of received data involves large amounts of time and effort, and thus there are cases in which a cause of a failure may not be determined. In simulation, a failure in the actual internal circuit is not reproduced, and in some cases, the reproduction is also time-consuming. In addition, since the method in which the internal circuit issues the command does not employ actually received commands and data, it takes time to reproduce a failure.

In particular, for a timing failure or the like, a failure reproduction test may be performed a number of times, which may require a large amount of time for investigating a cause of the failure.

### SUMMARY

An information processing system that processes received commands and data, the information processing system includes: an internal circuit that processes the received commands and data; a memory that stores the received commands and data as history; and a control circuit that reads the commands and data in the memory and outputs read commands and data to the internal circuit, in response to detection of a failure in the internal circuit.

The object and advantages of the various embodiments will be realized and attained by means of the elements and combinations particularly pointed out in the claims.

It is to be understood that both the foregoing general description and the following detailed description are exemplary and explanatory and are not restrictive of the various embodiments, as claimed.

### BRIEF DESCRIPTION OF DRAWINGS

FIG. 1 is a block diagram of an information processing system according to one embodiment;

FIG. 2 is a block diagram of a port unit illustrated in FIG. 1;

FIG. 3 is a block diagram of a history circuit illustrated in FIG. 2;

FIG. 4 is a flow diagram of write processing of the circuit illustrated in FIG. 3;

FIG. 5 illustrates a history memory in a data write mode 1 in FIG. 4;

FIG. 6 illustrates an operation in the data write mode 1 in FIG. 5;

FIG. 7 illustrates the history memory in a write mode 2 in FIG. 4;

FIG. 8 illustrates an operation in the write mode 2 in FIG. 7;

FIG. 9 is a time chart of the write mode 2 in FIG. 7;

FIG. 10 illustrates the history memory in a write mode 3 in FIG. 4;

FIG. 11 illustrates an operation in the write mode 3 in FIG. 10;

FIG. 12 is a flow diagram of read processing of the circuit illustrated in FIG. 3;

FIG. 13 is a time chart of the read processing in FIG. 12; and

FIG. 14 is a block diagram of an information processing system according to a second embodiment.

### DESCRIPTION OF EMBODIMENTS

While a first embodiment of an information processing system, an embodiment of a history circuit, history write processing, history read processing, a second embodiment of the information processing system, and other embodiments are described below in that order, the information processing system and the history circuit according to the present invention are not limited to the embodiments.

(First Embodiment of Information Processing System)

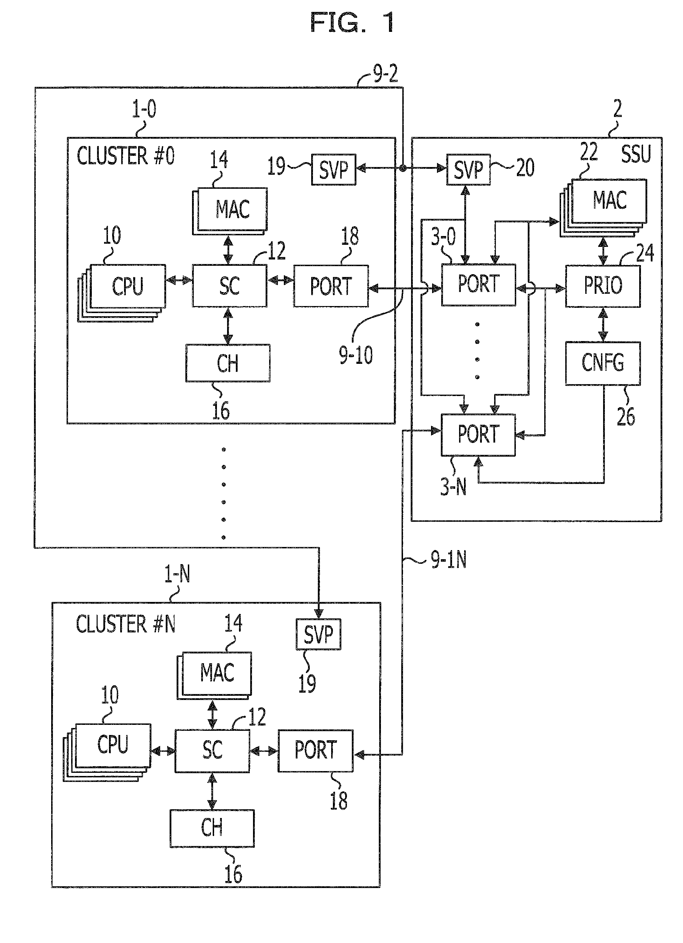

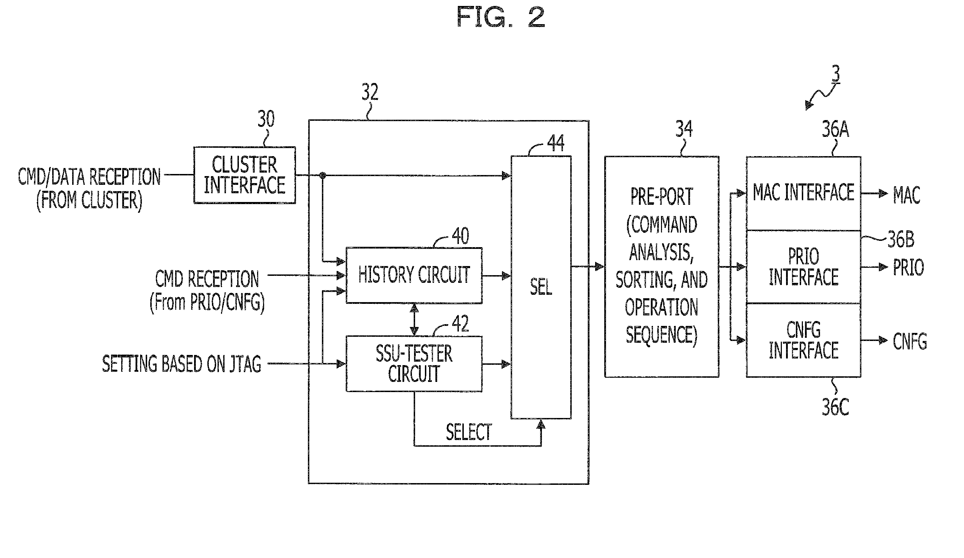

FIG. 1 is a block diagram of an information processing system according to one embodiment of the invention. FIG. 2 is a block diagram of a port circuit illustrated in FIG. 1. FIG. 1 illustrates a cluster system serving as an information processing system. As illustrated in FIG. 1, the cluster system has a plurality (N+1) of clusters 1-0 to 1-N and a system storage unit (SSU) 2. Each of the clusters 1-0 to 1-N has one or more central processing units (CPUs) 10, a memory access control (MAC) 14 having a memory, a channel unit (CH) 16 for controlling a connection with an external apparatus, a port unit 18 coupled to the system storage unit 2, a system controller (SC) 12, and a service processor (SVP) 19.

The CPUs 10 execute processing specified by an instruction. The channel unit 16 is coupled with another cluster and an input/output unit. The memory access controller 14 reads data at a specified address in the memory or writes data to the memory in response to a load or store instruction. The system controller 12 provides connections among the CPU 10, the memory access controller 14, the channel unit 16, and the port unit 18 to perform processing for sorting commands and data. The service processor 19 performs state setting, state monitoring, power-supply control, and so on of the CPU 10, the memory access controller 14, the system controller 12, the channel unit 16, and the port unit 18.

The system storage unit 2 is coupled to the clusters 1-0 to 1-N through corresponding transfer buses 9-10 to 9-1N to hold shared data and to perform communication between the clusters. The system storage unit 2 has port units 3-0 to 3-N coupled with the corresponding clusters 1-0 to 1-N, a MAC 22 having a memory, a priority control circuit (PRIO) 24, a configuration (CNFG) control circuit 26, and a service processor 20.

The port units 3-0 to 3-N are coupled with the port units 18 in the clusters 1-0 to 1-N through the transfer buses 9-10 to 9-1N, respectively, to transmit/receive commands and data and to analyze the commands. In the present embodiment, each of the port units 3-0 to 3-N has a history circuit described below. The memory access controller 22 reads data at a specified address in the memory or writes data to the memory in response to a load or store instruction. The priority control circuit 24 performs exclusion control for accessing the same address in the memory and priority control for memory access. The configuration control circuit 26 controls cluster-group dynamic changes in, for example, a connection between the clusters and the system control unit.

The service processor 20 performs state setting, state monitoring, power-supply control, and so on of the priority control circuit 24, the memory access controller 22, the configuration control circuit 26, and the port units 3-0 to 3-N. The service processor 20 further has input/output devices, such as a display and a keyboard. The service processor 20 is coupled with the service processors 19 in the clusters 1-0 to 1-N through a control bus 9-2 to perform state setting, state recognition, and so on of the service processors 19 in the clusters 1-0 to 1-N.

In the information processing system illustrated in FIG. 1, the clusters 1-0 to 1-N perform processing in parallel. The system storage unit 2 holds shared data and also performs communication between the clusters. In the system storage unit 2, the port units 3-0 to 3-N receive commands and data from the clusters 1-0 to 1-N through the corresponding buses 9-10 to 9-1N. The priority control circuit 24 prioritizes the received commands and performs exclusion control to perform memory access control on the memory access controller 22. That is, the memory access controller 22 executes a fetch command and a store command on the memory in descending order of priorities of the commands.

Each of the port units 3-0 to 3-N receives results of the execution of the fetch and store instructions from the memory access controller 22 and transfers the results to the corresponding clusters 1-0 to 1-N through the buses 9-10 to 9-1N. The service processor 20 performs state setting and state monitoring of the port units 3-0 to 3-N, the memory access controller 22, the priority control circuit 24, and the configuration control circuit 26. In this example, the service processor 20 performs various types of state setting on the port units 3-0 to 3-N through a control bus based on a JTAG (joint test action group) specification. The service processor 20 reads the states of the port units 3-0 to 3-N, the memory access controller 22, the priority control circuit 24, and the configuration control circuit 26 through the control bus based on the JTAG specification.

The port units 3-0 to 3-N in the system storage unit 2 will now be described with reference to FIG. 2. Since the port units 3-0 to 3-N have substantially the same configuration, one of the port units 3-0 to 3-N is indicated by a reference numeral "3" in FIG. 2. As illustrated in FIG. 2, the port unit 3 has a cluster interface circuit 30, a port circuit 32, a pre-port circuit 34, a MAC interface circuit 36A, a PRIO interface circuit 36B, and a CNFG interface circuit 36C. FIG. 2 illustrates only the configuration of a receiving side of the port unit 3.

The cluster interface circuit 30 receives commands (CMD) and data through the corresponding one of the buses 9-10 to 9-1N. The port circuit 32 has a history circuit 40, a system storage device (SSU) - tester circuit 42, and a selection (SEL) circuit 44.

The selection circuit 44 and the history circuit 40 receive the commands and data received by the cluster interface circuit 30. The history circuit 40 receives commands (CMD) from the priority control circuit 24 and the configuration control circuit 26. In addition, the history circuit 40 and the SSU-tester circuit 42 receive, from the service processor 20, setting information based on the JTAG specification. In response to a selection signal SELECT from the SSU-tester circuit 42, the selection circuit 44 selects one of outputs of the cluster interface circuit 30, the history circuit 40, and the SSU-tester circuit 42 and outputs the selected output.

The pre-port circuit 34 receives the output of the selection circuit 44 in the port circuit 32, analyzes the commands, sorts the commands, and determines an operation sequence for the commands. In accordance with the determined operation sequence, the pre-port circuit 34 outputs internal commands and data to the priority control circuit 24, the memory access controller 22, and the configuration control circuit 26 through the MAC interface circuit 36A, the PRIO interface circuit 36B, and the CNFG interface circuit 36C.

In the present embodiment, when no failure occurs, the commands and data received by the cluster interface circuit 30 are input to the selection circuit 44 and the history circuit 40. When no failure occurs, the selection circuit 44 selects the commands and data received by the cluster interface circuit 30 and outputs the commands and data to the pre-port circuit 34. The history circuit 40 logs the commands and data received by the cluster interface circuit 30 and the commands of the priority control circuit 24 and the configuration control circuit 26.

In the configuration illustrated in FIG. 1, when the service processor 20 detects a failure in any of the port units 3-0 to 3-N in the system storage unit 2, the failure is displayed on a display for the service processor 20. An operator enters a read mode via the input device, such as the keyboard, for the service processor 20. The service processor 20 performs, through the control bus based on the JTAG specification, read setting on the history circuit 40 and the SSU-tester circuit 42 in the port circuit 32 in the port unit from which the failure was detected, the port unit being included in the port units 3-0 to 3-N.

In accordance with the read setting, the SSU-tester circuit 42 switches a selection output from the output from the history circuit 40 or the output of the SSU-tester circuit 42 to the selection circuit 44. When the read setting is for the history circuit 40, the history circuit 40 reads the logged commands and data and outputs the read commands and data to the pre-port circuit 34 via the selection circuit 44 under the control of the SSU-tester circuit 42.

When the read setting is for the SSU-tester circuit 42, the SSU-tester circuit 42 outputs a predetermined command and data to the pre-port circuit 34 via the selection circuit 44.

In this case, the port unit from which the failure was detected, the port unit being included in the port units 3-0 to 3-N, autonomously suppresses the outputting. Thus, the pre-port circuit 34, the MAC interface circuit 36A, the PRIO interface circuit 36B, and the CNFG interface circuit 36C operate in accordance with the commands and data read by the history circuit 40. Consequently, it is possible to reproduce a failure in the port unit 3-0 to 3-N.

The service processor 20 scans a register and the internal circuit in the port unit 3 and collects the state information through the control bus based on the JTAG specification. The service processor 20 may collect history information of the memory access controller 22, the priority control circuit 24, and the configuration control circuit 26 through the control bus based on the JTAG specification.

An operator or maintenance personnel may analyze a cause of a failure on the basis of the state information collected by the service processor 20. Thus, when a failure occurs in the port unit, the failure may be reproduced based on the logged commands and data. Thus, this arrangement is advantageous to enhance the precision of analysis and to reduce the time of analysis. For example, in the present embodiment, a timing failure may be easily reproduced as described below.

(Embodiment of History Circuit)

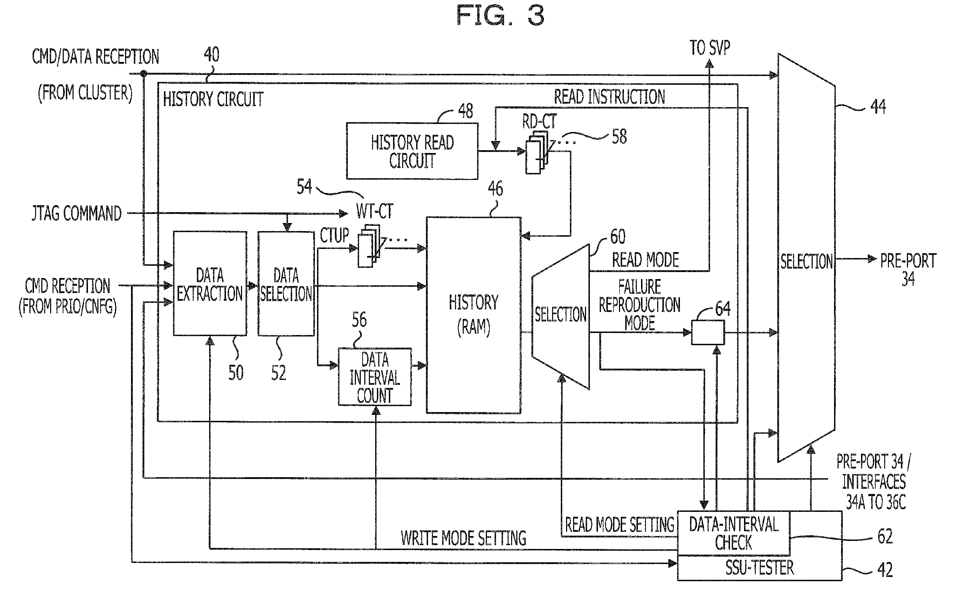

FIG. 3 is a block diagram of an embodiment of a history circuit illustrated in FIG. 2. In FIG. 3, the same elements as those illustrated in FIG. 2 are denoted by the same reference numerals. As illustrated in FIG. 3, the history circuit 40 has a history memory 46 that stores the commands/data received from the corresponding one of the clusters 1-0 to 1-N and the commands received from the priority control circuit 24 and the configuration control circuit 26. For example, the history memory 46 may be implemented by a RAM (random access memory).

The SSU-tester circuit 42 has a hardware tester function for issuing a predetermined command for operating and testing the memory access controller 22, the priority control circuit 24, and the configuration control circuit 26 and a function for controlling reading/writing of the history memory 46 in accordance with a write mode and a read mode specified by a JTAG command sent from the service processor 20 through the control bus.

A write circuit for the history memory 46 includes a data extraction circuit 50, a data selection circuit 52, a write counter 54, and a data-interval counter 56. When the write mode is specified by the SSU-tester circuit 42, the data extraction circuit 50 operates to extract information needed for reproducing a failure. For example, when a write mode (described below) is specified, the data extraction circuit 50 extracts the commands/data received from the corresponding one of the clusters 1-0 to 1-N, the commands received from the priority control circuit 24 and the configuration control circuit 26, and the flags of the internal states of the pre-port circuit 34, the MAC interface circuit 36A, the PRIO interface circuit 36B, and the CNFG interface circuit 36C in the port unit 3.

The data selection circuit 52 selects, from the data from the data extraction circuit 50, data specified by the JTAG command sent from the service processor 20 through the control bus. When the write mode is specified by the SSU-tester circuit 42, the data-interval counter 56 operates to count the intervals of data and to output a count value to the history memory 46.

The write counter 54 updates a write address so that the write address specified by a JTAG command sent from the service processor 20 through the control bus comes first and outputs the updated write address to the history memory 46.

The data selected by the data selection circuit 52 is written to, in the history memory 46, a position at the address indicated by the write counter 54. Upon the writing, the write counter 54 is incremented by "1". With respect to valid data in information to be written, the data selection circuit 52 writes a valid bit of 0 to the history memory 46. With respect to invalid data, the data selection circuit 52 writes a valid bit of 1 to the history memory 46. The data-interval counter 56 counts the data interval and writes a resulting count value to the history memory 46.

A read circuit will be described next. A read circuit for the history memory 46 has a normal history read mode and a failure reproduction mode in the present embodiment. The read circuit has a history read circuit 48 for the normal read mode, a read counter 58, a selection circuit 60, and an output register 64.

In the normal read mode, the SSU-tester circuit 42 operates the history read circuit 48 to selectively connect an output of the selection circuit 60 to the service processor 20. On the other hand, when a failure reproduction mode is specified by the service processor 20, the SSU-tester circuit 42 connects the selection circuit 60 to a failure-reproduction mode side, i.e., to the selection circuit 44.

The SSU-tester circuit 42 also has a data-interval check function 62. The data-interval check function 62 checks the interval of the data output from the selection circuit 60. In accordance with the checked interval, the SSU-tester circuit 42 issues a read instruction to the read counter 58.

Thus, when the normal history read mode is specified, the SSU-tester circuit 42 selectively connects the selection circuit 60 to the service processor 20, counts up the read counter 58 in response to an instruction from the history read circuit 48, and outputs log data of the history memory 46 to the service processor 20.

On the other hand, when the failure reproduction mode is specified by the service processor 20, the SSU-tester circuit 42 selectively connects an output of the selection circuit 60 to the selection circuit 44, increments the read counter 58 in accordance with the data interval of the data-interval check function 62, and outputs the log data of the history memory 46 to the pre-port circuit 34 via the selection circuit 44 and the output register 64. When a test mode is specified by the service processor 20, the SSU-tester circuit 42 outputs a predetermined command and data to the pre-port circuit 34 via the selection circuit 44.

(History Write Processing)

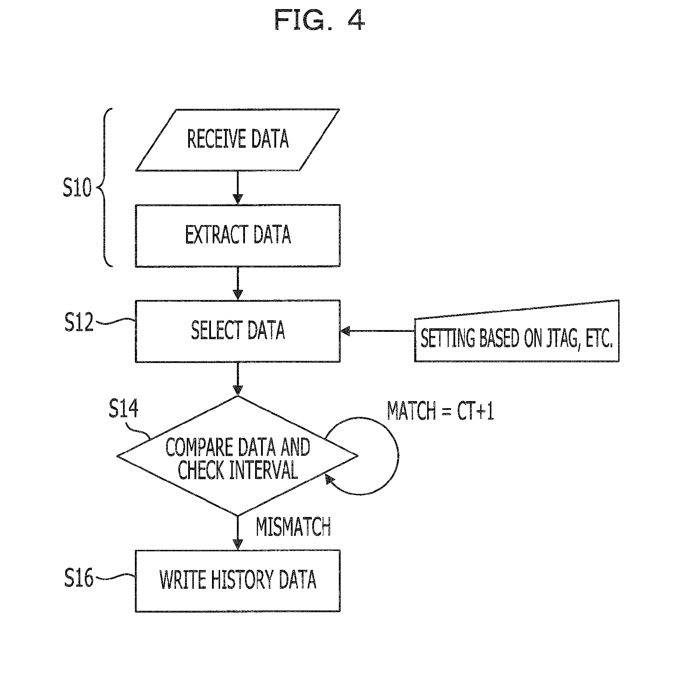

FIG. 4 is a flow diagram of history write processing in the present embodiment. Data write processing of the history circuit will now be described below with reference to FIG. 4.

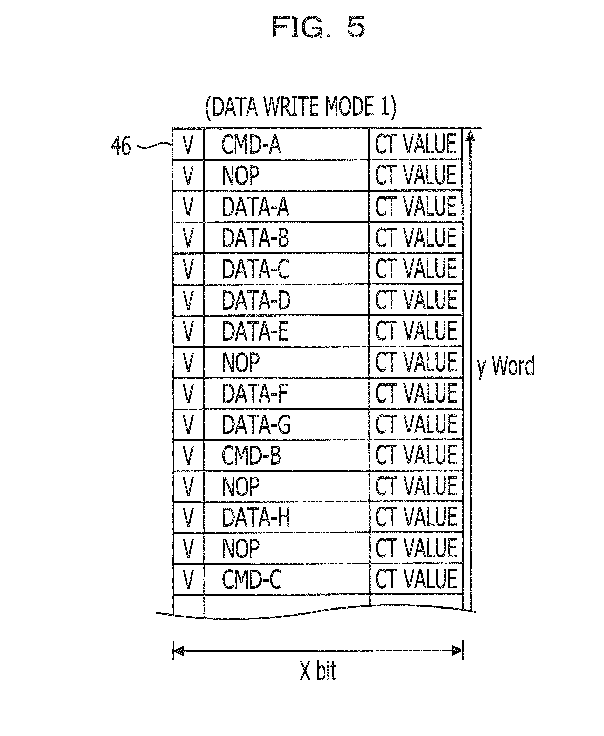

In this case, for the SSU-tester circuit 42, the write mode has been specified by the service processor 20. The write mode can be specified in three different types, as described below with reference to FIGS. 5 to 10. The SSU-tester circuit 42 issues an instruction indicating the specified write mode to the data extraction circuit 50 and the data-interval counter 56. In addition, in operation S10, the data extraction circuit 50 extracts data, as described below with reference to FIGS. 5 to 10.

In operation S12, the data selection circuit 52 selects data specified by the service processor 20.

In operation S14, the data selection circuit 52 compares the data selected this time with data selected next time. When those pieces of data match each other, the data selection circuit 52 increments a count value CT of the data-interval counter 56 by "1".

Upon detecting that the data selected this time and the data selected next time do not match each other, the process proceeds to operation S16 in which the data selection circuit 52 writes the data selected this time, a valid flag, and the count value of the data-interval counter 56 to the history memory 46. The data selection circuit 52 then increments the write counter 54 by "1".

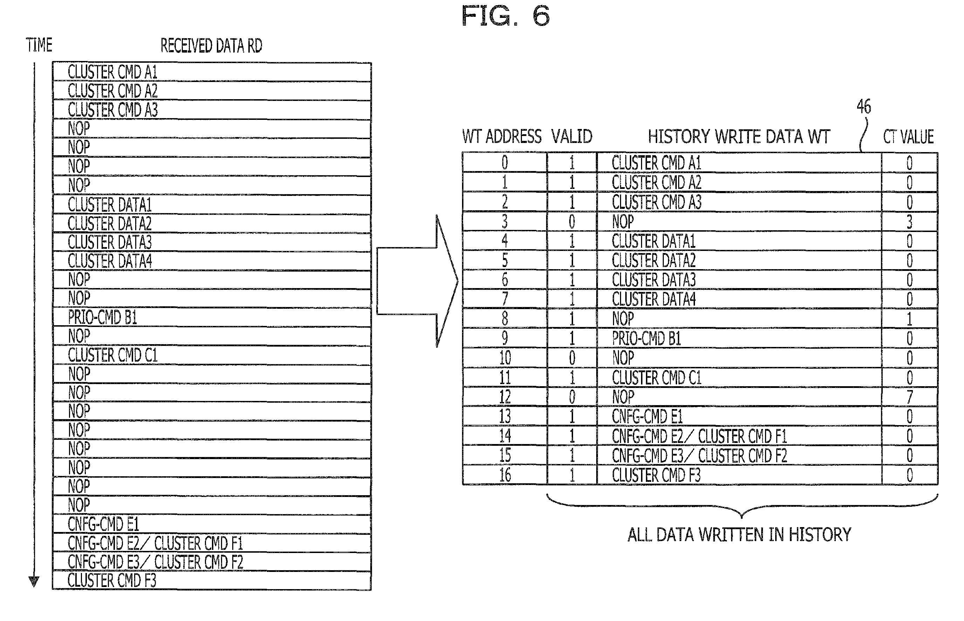

In the present embodiment, three types of data write mode, i.e., data write modes 1, 2, and 3, can be specified. The write modes 1, 2, and 3 will be described below. FIG. 5 illustrates the history memory in the data write mode 1 in FIG. 4. FIG. 6 illustrates an operation in the data write mode 1 in FIG. 5.

The data write mode 1 in FIG. 5 is a mode in which all of valid data received from the corresponding one of the clusters 1-0 to 1-N are written to the history memory 46. In FIG. 5, the history memory 46 has a history (log) storage field (word) having a width of X bits for each address. Each history storage field has a valid field (V), a command/data storage field, and a count-value storage field (CT value).

When the corresponding word (the history storage field) is valid, "1" is written to the valid field (V), and when the corresponding word is invalid (NOP: Not Operation), "0" is written to the valid field (V). In the command/data storage field, CMD-N represents a command received from the cluster or another LSI (in this case, the priority control circuit 24 or the configuration control circuit 26). DATA-n represents data received from the cluster and NOP represents invalid data. The invalid data is, for example, in the case of a cluster transfer rule specifying that the cluster issues cluster data when a specified and/or predetermined number of cycles passes after issuing a cluster command, data inserted between the cluster command and cluster data.

The CT value varies depending on the data write mode. In the case of the write mode 1 illustrated in FIG. 5, for the invalid data (NOP), the CT value indicates the number of pieces of continuous invalid data so that the interval of the pieces of valid data before and after the invalid data may be determined or known.

The data write mode 1 will be described in more detail with reference to FIG. 6. FIG. 6 illustrates an example in which the data extraction circuit 50 illustrated in FIG. 3 time-sequentially receives three cluster commands (CMD) A1, A2, and A3 from the cluster, four pieces of invalid data (NOP), four pieces of cluster data (DATA), two pieces of invalid data (NOP), a command (PRIO-CMD) B1 from one priority circuit, one piece of invalid data (NOP), one cluster command (CMD) C1, eight pieces of invalid data (NOP), a command (CNFG-CMD) E1 from one configuration control circuit, a command (CNFG-CMD) E2 and a cluster command (CMD) F1 from one configuration control circuit, a command (CNFG-CMD) E3 and a cluster command (CMD) F2 from one configuration control circuit, and one cluster command (CMD) F3.

In this case, for the data extraction circuit 50, the write mode 1 has been specified by the service processor 20. The data extraction circuit 50 analyzes the received data. Upon determining that the received data is command(s)/data received from the clusters 1-0 to 1-N, the priority control circuit 24, or the configuration control circuit 26, the data extraction circuit 50 writes a valid flag "1" and all of the command(s) and data to the history memory 46 via the data selection circuit 52. After writing the command(s)/data, the data extraction circuit 50 also increments the write counter 54 by "1".

Upon determining that the received data is invalid data (NOP), the data extraction circuit 50 determines whether or not data selected at next timing is invalid data. When the data selected at the next timing is invalid data, the data extraction circuit 50 uses the data selection circuit 52 to increment the data-interval counter 56 by "1". Then, upon detecting that the received data selected at the next timing is not invalid data, the data extraction circuit 50 writes a valid flag "0", the invalid data, and the count value CT to the history memory 46 via the data selection circuit 52. After the writing to the history memory 46, the data extraction circuit 50 increments the write counter 54 by "1".

Thus, in the write mode 1, all of the command(s)/data are written to the history memory 46 and also the invalid data between the command and the data is written. With this arrangement, for reproduction of a failure, a timing failure can be realized through reading of the invalid data. Since the number of pieces of continuous invalid data is written, it is possible to reduce and/or prevent an increase in the capacity of the history memory 46. Since the capacity of the history memory 46 is limited, a larger amount of data can also be logged in the history memory 46 and the efficient use thereof can be realized.

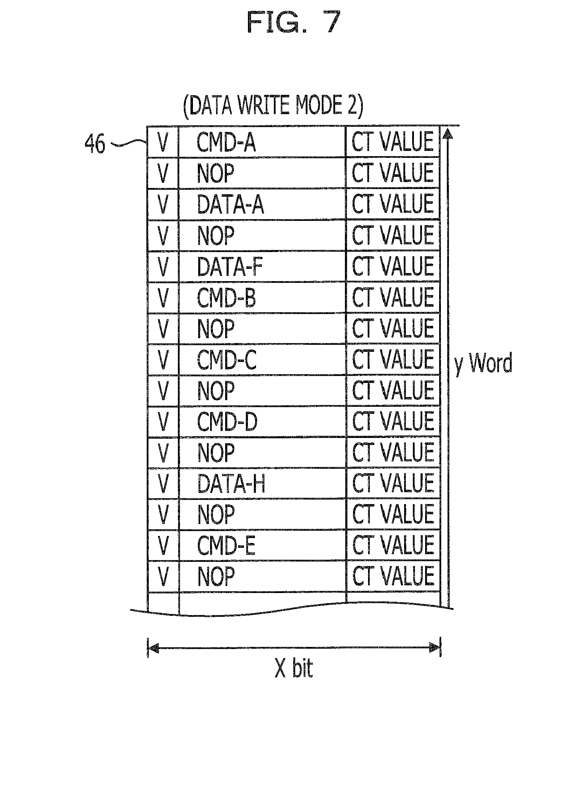

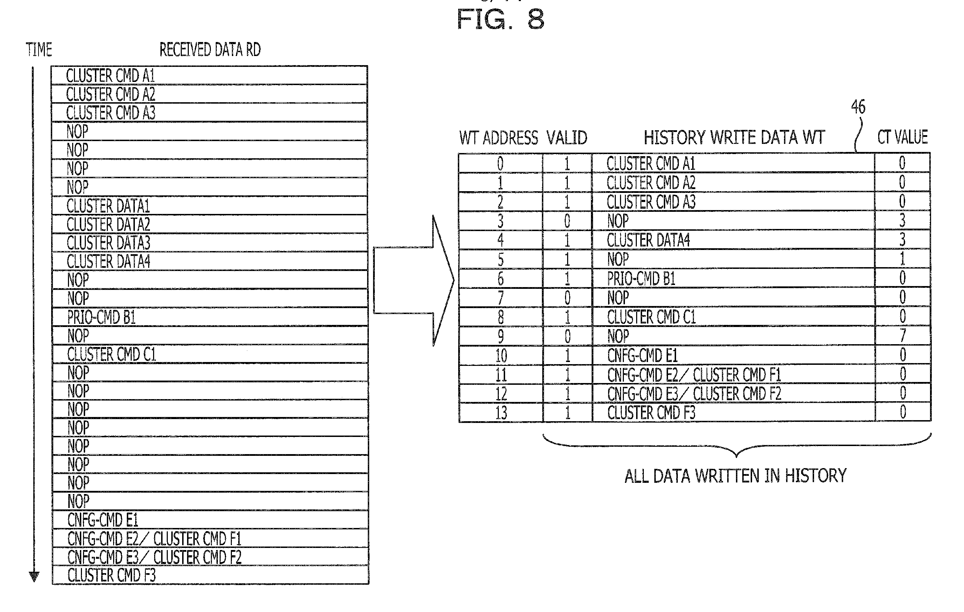

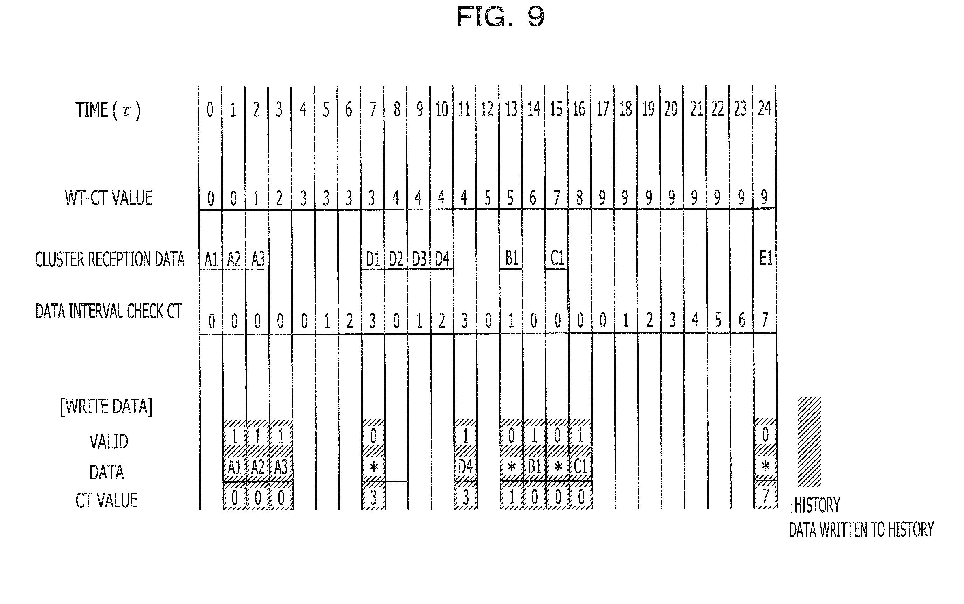

FIG. 7 illustrates the history memory in the data write mode 2 in FIG. 4. FIG. 8 illustrates an operation in the data write mode 2 in FIG. 7. FIG. 9 is a time chart of the data write mode 2 in FIG. 8.

The data write mode 2 in FIG. 7 is a mode in which all of commands received from the corresponding one of the clusters 1-0 to 1-N are written to the history memory 46. In this write mode, when pieces of data continue, only the first piece of the data is written to the history memory 46 and also the number of pieces of the continuous data is written to the history memory 46.

In FIG. 7, the history memory 46 has a history (log) storage field (word) having a width of X bits for each address, as in the case of FIG. 5. Each history storage field has a valid field (V), a command/data storage field, and a count-value storage field (CT value).

When the corresponding word (the history storage field) is valid, "1" is written to the valid field (V), and when the corresponding word is invalid (NOP: Not Operation), "0" is written to the valid field (V). In the command/data storage field, CMD-N represents a command received from the cluster or another LSI (in this case, the priority control circuit 24 or the configuration control circuit 26). DATA-n represents data received from the cluster and NOP represents invalid data between the cluster command and the cluster data.

In the case of the write mode 2 illustrated in FIG. 7, for the invalid data (NOP), the CT value indicates the number of pieces of continuous invalid data and the number of continuous valid data of the cluster so that the interval of the pieces of valid data before and after the invalid data may be determined or known.

The data write mode 2 will be described in more detail with reference to FIGS. 8 and 9. FIG. 8 illustrates an example in which the data extraction circuit 50 illustrated in FIG. 3 receives, in the same sequence of time as that in FIG. 6, cluster commands (CMD), invalid data (NOP), cluster data (DATA), a command (PRIO-CMD) from the priority control circuit, and commands (CNFG-CMD) from the configuration control circuit.

In FIG. 9, time τ indicates reception sampling timing and the WT-CT value indicates a count value (write address) of the write counter 54. Cluster reception data are the received data RD illustrated in FIG. 8, the commands are indicated by A1 to A3, B1, C1, and E1, and the data are indicated by D1 to D4. The data interval check CT indicates the count value of the data-interval counter 56.

In this case, for the data extraction circuit 50, the write mode 2 has been specified by the service processor 20. The data extraction circuit 50 analyzes the received data. As illustrated in FIGS. 8 and 9, upon determining that the received data are the commands A1, A2, A3, and C1 of the clusters 1-0 to 1-N, the command B1 from the priority control circuit 24, and the command E1 received from the configuration control circuit 26, the data extraction circuit 50 writes a valid flag "1" and the commands A1, A2, A3, B1, C1, and E1 to the history memory 46 via the data selection circuit 52. After writing the commands, the data extraction circuit 50 increments the write counter 54 by "1".

As illustrated in FIGS. 8 and 9, upon determining that the received data is the cluster data D1, D2, D3, or D4, the data extraction circuit 50 determines whether or not data extracted at next timing is cluster data. When the data selected at the next timing is cluster data, the data extraction circuit 50 increments the data-interval counter 56 by "1". Upon detecting that the received data selected at the next timing is not cluster data, the data extraction circuit 50 writes a valid flag "1", the cluster data D4, and the count value CT ("3" in the case of FIG. 9) to the history memory 46. After the writing to the history memory 46, the data extraction circuit 50 increments the write counter 54 by "1".

As illustrated in FIGS. 8 and 9, upon determining that the received data is invalid data, the data extraction circuit 50 writes a valid flag "0", the invalid data (indicated by "*" mark in FIG. 9), and the count value CT to the history memory 46, as in the case of FIG. 6.

As illustrated in FIG. 8, in the write mode 2, all commands are written to the history memory 46, the representing data D4 of the continuous data, the number of pieces of the continuous data, invalid data between the data/command(s), and the number of continuous invalid data are also written. Thus, for reproduction of a failure, a timing failure can be realized through reading of the invalid data. Since the number of pieces of continuous invalid data is written, it is possible to reduce and/or prevent an increase in the capacity of the history memory 46. In addition since, the representative data is stored, the history memory 46 can be efficiently used.

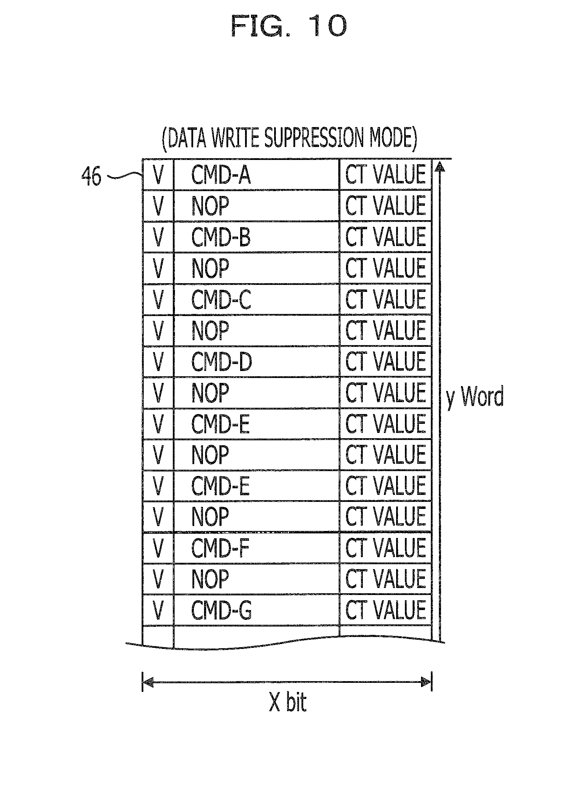

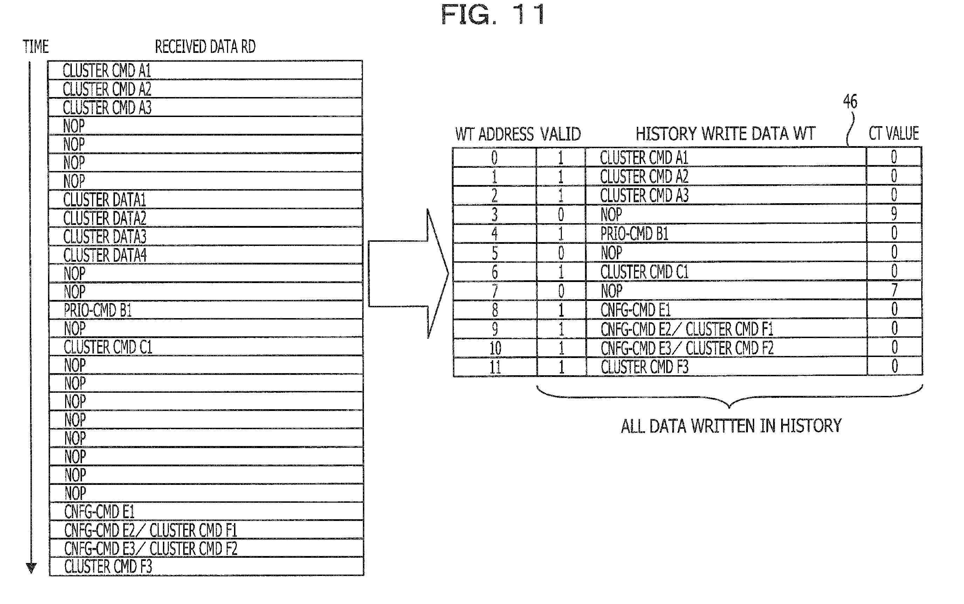

FIG. 10 illustrates the history memory in the data write mode 3 in FIG. 4. FIG. 11 illustrates an operation in the data write mode 3 in FIG. 10.

The data write mode 3 in FIG. 10 is a mode in which all of commands received from the corresponding one of the clusters 1-0 to 1-N are written to the history memory 46. In the data write mode 3, data are not written and the number of pieces of continuous invalid data is written to the history memory 46.

In FIG. 10, the history memory 46 has a history (log) storage field (word) having a width of X bits for each address, as in the cases of FIGS. 5 and 7. Each history storage field has a valid field (V), a command/data storage field, and a count-value storage field (CT value).

When the corresponding word (the history storage field) is valid, "1" is written to the valid field (V), and when the corresponding word is invalid (NOP: Not Operation), "0" is written to the valid field (V). In the command/data storage field, CMD-N represents a command received from the cluster or another LSI (in this case, the priority control circuit 24 or the configuration control circuit 26). NOP represents invalid data between the cluster command and the cluster data.

In the case of the write mode 3 illustrated in FIG. 10, for the invalid data (NOP), the CT value indicates the number of pieces of continuous invalid data so that the interval of the pieces of valid data before and after the invalid data may be determined or known.

The data write mode 3 will be described in more detail with reference to FIG. 11. FIG. 11 illustrates an example in which the data extraction circuit 50 illustrated in FIG. 3 receives, in the same sequence of time as that in FIGS. 6 and 8, cluster commands (CMD), invalid data (NOP), cluster data (DATA), a command (PRIO-CMD) from the priority control circuit, and commands (CNFG-CMD) from the configuration control circuit.

In this case, for the data extraction circuit 50, the write mode 3 has been specified by the service processor 20. The data extracting circuit 50 analyzes the received data. Upon determining that the received data is a command received from one of the clusters 1-0 to 1-N, the priority control circuit 24, and the configuration control circuit 26, the data extraction circuit 50 writes a valid flag "1" and all of the command(s) to the history memory 46. After writing the commands, the data extraction circuit 50 counts up the write counter 54 by "1".

Upon determining that the received data is cluster data, the data extraction circuit 50 discards the received data. Upon determining that the received data is invalid data, the data extraction circuit 50 writes a valid flag "0", the invalid data, and the count value to the history memory 46, as in the cases of FIGS. 6 and 8.

Thus, in the write mode 3, all of the commands are written to the history memory 46 and also the number of continuous invalid data between the commands is written. Thus, for reproduction of a failure, a timing failure can be realized through reading of the invalid data. Since the number of pieces of continuous invalid data is written, it is possible to reduce and/or prevent an increase in the capacity of the history memory 46. In addition, since the data are discarded, the history memory 46 can be efficiently used.

(History Read Processing)

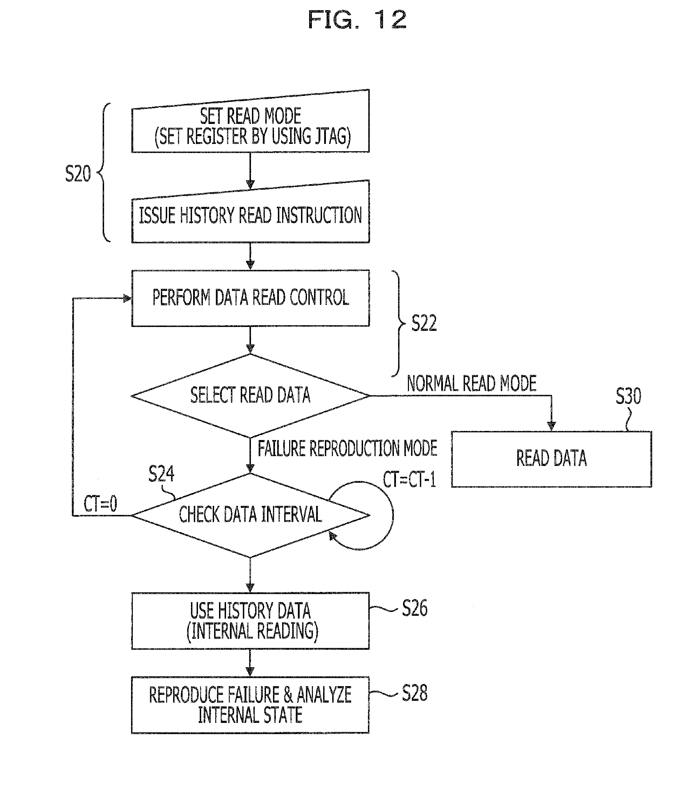

FIG. 12 is a flow diagram of history read processing in the present embodiment. The read processing will now be described with reference to FIG. 12.

Upon detecting a failure in the system storage unit 2, the service processor 20 reports the failure detection to the operator via the display for the service processor 20. In operation S20, an operator enters a read mode via the input device for the service processor 20. The service processor 20 sets the read mode for the SSU-tester circuit 42 through the control bus based on the JTAG or the like. In the present embodiment, the read mode has three modes, i.e., a normal read mode, a failure reproduction mode, and a tester mode.

For specifying the failure reproduction mode, one of the write modes 1, 2, and 3 is specified. In addition, the operator specifies a read start address and a read end address in the history memory 46, as needed. After the setting, the service processor 20 outputs a history reading instruction to the SSU-tester circuit 42.

In operation S22, the SSU-tester circuit 42 starts data-reading control. The SSU-tester circuit 42 starts the read counter 58. As a result, history data at the position of the address specified by the read counter 58 is read from the history memory 46. In accordance with whether the set read mode is the failure reproduction mode or the normal read mode, the SSU-tester circuit 42 controls the selection circuit 60.

When the read mode is the failure reproduction mode, the process proceeds to operation S24 in which the selection circuit 60 outputs the read history data to the register 64 and the SSU-tester circuit 42. The data-interval check function 62 of the SSU-tester circuit 42 refers to the CT value in the history data to check the data interval. On the basis of a result of the data interval checking, the SSU-tester circuit 42 determines whether or not data at a next address is to be read. That is, as illustrated in FIGS. 5 to 11, the read history data are a valid bit, data (command/data), and the CT value. When the valid bit is "1" or the CT value is "0", the SSU-tester circuit 42 issues an output instruction to the register 64 and increments the read counter 58 by "1", Thereafter, the process returns to operation S22.

When the valid bit in the read history data is "0", the SSU-tester circuit 42 refers to the CT value, issues an output instruction to the register 64, and decrements the CT value by "1". The SSU-tester circuit 42 repeatedly performs the issuance of the output instruction to the register 64 and the processing for decrementing "1" from the CT value and determines whether or not the CT value reaches "0". When the CT value is "0", the SSU-tester circuit 42 issues an output instruction to the register 64 and increments the read counter 58 by "1". Thereafter, the process returns to operation S22.

In operation S26, in the case of the failure reproduction mode, since the SSU-tester circuit 42 instructs the selection circuit 44 so as to select an output of the register 64, the data in the register 64 is output to the pre-port circuit 34 via the selection circuit 44.

In operation S28, in response to the data from the selection circuit 44, the pre-port circuit 34, the interface circuits 36A, 36B, and 36C, the priority control circuit 24, the memory access controller 22, and the configuration control circuit 26 operate to reproduce the failure. The service processor 20 scans the states of the internal circuit (the pre-port circuit 34, the interface circuits 36A, 36B, and 36C, the priority control circuit 24, the memory access controller 22, and the configuration control circuit 26) in the system storage unit 2 to collect the states through the control bus based on the JTAG specification or the like. The service processor 20 outputs a result of the collected states. An operator or maintenance personnel may analyze the result of the collected states. The service processor 20 may transmit the collected data to a remote monitoring center (not illustrated). The remote monitoring center may analyze the collected data.

Repeatedly performing the read control makes it possible to read valid data (i.e., data with a valid bit of "1") at the same timing as the timing in the writing. This allows valid data to be sequentially read at the same timing as the reception timing.

In the write mode 3 in which no cluster data is written, the SSU-tester circuit 42 may determine or know the data transfer length from the information of the read data (commands) and thus outputs set cluster data to the selection circuit 44. This cluster data may be data preset using a JTAG command or the like or may be a store address for the system storage unit 2.

In addition, the SSU-tester circuit 42 may cyclically execute reading of the history data between arbitrary read addresses. In such a case, the addresses are set using a JTAG command from the service processor 20 or the like. With this arrangement, the internal operation of the circuit during failure reproduction may be stopped using an instruction.

In the present embodiment, a hardware operation immediately before a failure may be substantially, identically reproduced based on the history data. This makes it possible to realize failure-checking narrowing down and makes it possible to reduce the amount of time for checking a cause of a failure. When changes in the operation of the internal circuit in the system storage unit 2 are prepared, a change in the operation can be easily checked. In addition, since the data of the history memory in the system storage unit 2 is used, the internal operation of the port unit may be usefully examined even if the clusters and the internal circuit (LSI : Large Scale Integration) of the SSU are not logically connected.

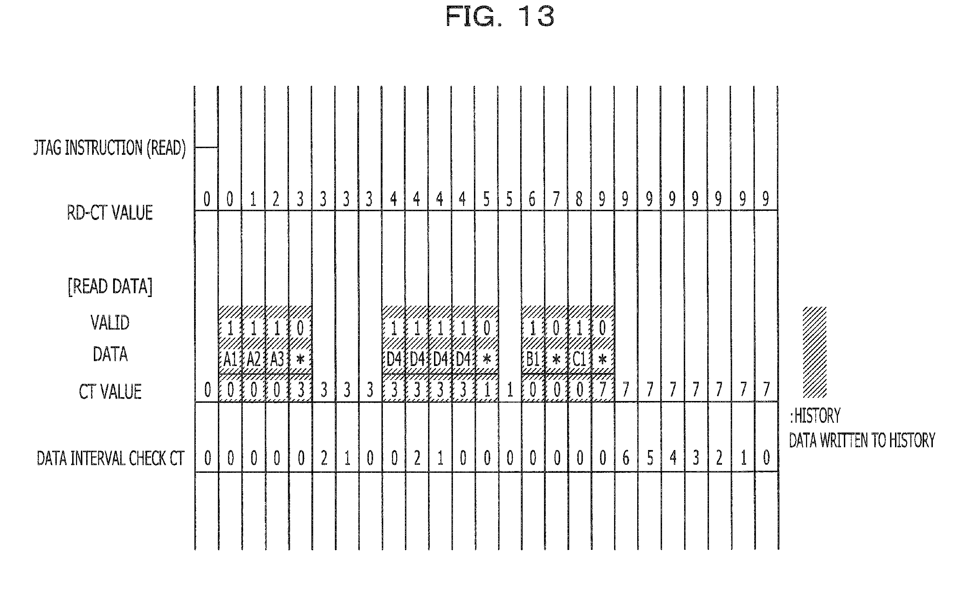

A description will be given in more detail in conjunction with an example in the write mode 2 described above. FIG. 13 is a time chart of read processing of the history memory to which writing was performed in the write mode 2 in FIGS. 8 and 9. The read-processing time chart in FIG. 13 will now be described in conjunction with FIGS. 8 and 9.

In FIG. 13, the horizontal axis indicates time and the RD-CT value indicates the count value (read address) of the read counter 58. The read data indicates valid flags (VALID), the commands A1 to A3, B1, C1, and E1 of the history data, and the data D4 in the history memory 46. The CT value indicates the data interval value CT of the history memory 46 and the data interval check CT indicates a data check count value.

As illustrated in FIG. 13, the service processor 20 issues a JTAG (history reading) instruction to the SSU-tester circuit 42 by using a JTAG command or the like. The service processor 20 starts the read counter 58. In this case, the read counter 58 starts at a value of "0".

The history data at the address indicated by the read counter 58 is read from the history memory 46. The SSU-tester circuit 42 refers to the CT value of the read history data to determine whether or not next data is to be read. When the CT value is "0", the SSU-tester circuit 42 outputs the read history data to the selection circuit 44 via the register 64.

The SSU-tester circuit 42 then increments the value of the read counter 58 by "1" and reads next data from the history read circuit 48. In FIG. 13, since the CT values of the commands A1, A2, A3, B1, and C1 are "0", next history data is read.

When the CT value of the read history data is not "0", the SSU-tester circuit 42 decrements a data check CT value incorporating the CT value by "1" at each timing. At each of the timings, the SSU-tester circuit 42 outputs the read history data from the register 64 to the selection circuit 44. When the data interval check value reaches "0", the SSU-tester circuit 42 increments the value of the read counter 58 by "1" and reads next data from the history read circuit 48.

In FIG. 13, since the first invalid data (indicated by "*") has a CT value of "3", the invalid data is output at four timings. Since the cluster data D4 has a CT value of "3", the same cluster data D4 is output at four timings. The above-described operation is repeated until a failure is reproduced or a stop instruction is given by the operator.

When address points are set by the service processor 20, the operation is repeated in the range between the address points.

Similarly, in the data write mode 1, the SSU-tester circuit 42 refers to the value flag and the CT value of the read history data and determines whether or not next data is to be read, as described above with reference to FIGS. 6 and 12. When the valid flag indicates "1", the SSU-tester circuit 42 reads the next data. When the CT value is not "0", the SSU-tester circuit 42 decrements the CT value by "1" at each timing. When the CT value reaches "0", the SSU-tester circuit 42 reads the next data.

In the data write mode 1, since all of the valid data are written to the history memory 46, no CT value is set for the valid data. Since the CT value is set for only the invalid data (NOP), it is sufficient to make a determination based on the valid flag.

As in the case of FIG. 13, the data write mode 3 is a cluster data suppression mode, i.e., a mode in which the cluster valid data received from the cluster is not written to the history memory 46. As described above with reference to FIG. 11, since no cluster data is written to the history memory 46, the SSU-tester circuit 42 outputs a read address as cluster data. The SSU-tester circuit 42 outputs data set by the JTAG command sent from the service processor 20.

After outputting the cluster command, the SSU-tester circuit 42 outputs a number of pieces of invalid data and then outputs the cluster data. In order to efficiently use the history memory, it may be desirable that the mode be preset to the write mode 2 or the write mode 3, in the case of reproducing a failure. That is, in the case of the write mode 1, since all of data are logged in the history memory, the history memory may be filled with the data when a large number of pieces of valid data are received from the clusters.

(Second Embodiment of Information Processing System)

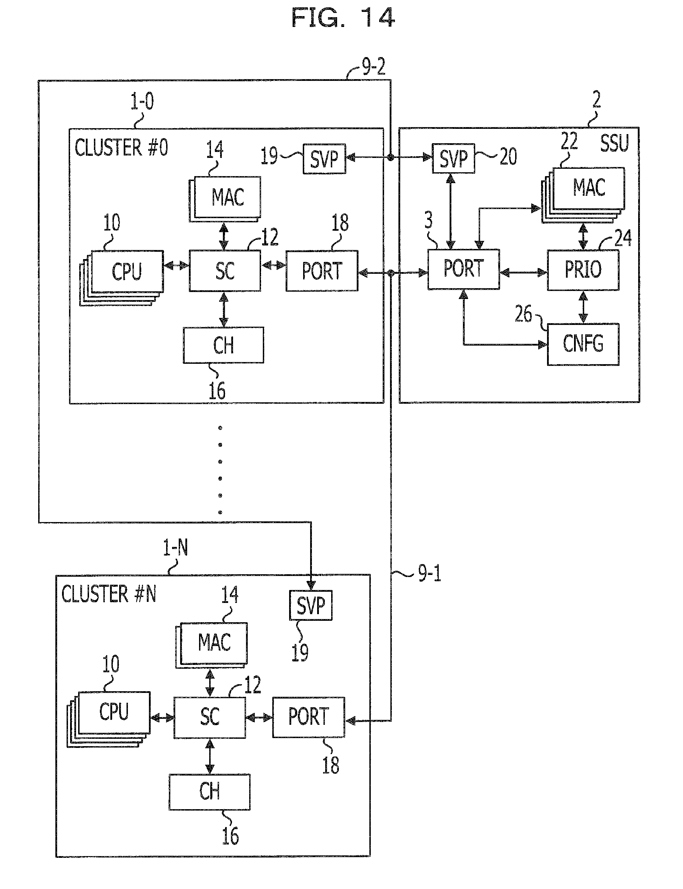

FIG. 14 is a block diagram of an information processing system according to a second embodiment. In FIG. 14, the same elements as those illustrated in FIGS. 1 and 2 are denoted by the same reference numerals. FIG. 14 illustrates a cluster system serving as an information processing system. As illustrated in FIG. 14, the cluster system has a plurality (N+1) of clusters 1-0 to 1-N and a system storage unit (SSU) 2. Each of the clusters 1-0 to 1-N has one or more CPUs 10, a memory access control (MAC) 14 having a memory, a channel unit (CH) 16 for controlling a connection with an external apparatus, a port unit 18 coupled to the system storage unit 2, a system controller (SC) 12, and a service processor (SVP) 19.

The CPUs 10 execute computation processing specified by an instruction. The channel unit 16 is coupled with another cluster and an input/output unit. The memory access controller 14 reads data at a specified address in the memory or writes data to the memory in response to a load or store instruction. The system controller 12 provides connections among the CPU 10, the memory access controller 14, the channel unit 16, and the port unit 18 to perform processing for sorting commands and data. The service processor 19 performs state setting, state monitoring, power-supply control, and so on of the CPU 10, the memory access controller 14, the system controller 12, the channel unit 16, and the port unit 18.

The system storage unit 2 is coupled to the clusters 1-0 to 1-N through a transfer bus 9-1 to hold shared data and to perform communication between the clusters. The system storage unit 2 has a port unit 3, an MAC 22 having a memory, a priority control circuit (PRIO) 24, a configuration (CNFG) control circuit 26, and a service processor 20.

The port unit 3 is coupled with the port units 18 in the clusters 1-0 to 1-N through the transfer bus 9-1 to transmit/receive commands and data and to analyze the commands. In the present embodiment, the port unit 3 has the history circuit described above with reference to FIGS. 2 and 3. The memory access controller 22 reads data at a specified address in the memory or writes data to the memory in response to a load or store instruction. The priority control circuit 24 performs exclusion control for accessing the same address in the memory and priority control for memory access. The configuration control circuit 26 controls cluster-group dynamic changes in, for example, a connection between the clusters and the system control unit.

The service processor 20 performs state setting, state monitoring, power-supply control, and so on of the priority control circuit 24, the memory access controller 22, the configuration control circuit 26, and the port unit 3. The service processor 20 further has input/output devices, such as a display and a keyboard. The service processor 20 is coupled with the service processors 19 in the clusters 1-0 to 1-N through a control bus 9-2 to perform state setting, state recognition, and so on of the service processors 19 in the clusters 1-0 to 1-N.

In the information processing system illustrated in FIG. 14, the clusters 1-0 to 1-N perform processing in parallel. The system storage unit 2 holds shared data and also performs communication between the clusters. In the system storage unit 2, the port unit 3 receives commands and data from the clusters 1-0 to 1-N through the bus 9-1. The priority control circuit 24 prioritizes the received commands and performs exclusion control to perform memory access control on the memory access controller 22. That is, the memory access controller 22 executes a fetch command and a store command on the memory in descending order of priorities of the commands.

The port unit 3 receives results of the execution of the fetch and store instructions from the memory access controller 22 and transfers the results to the corresponding clusters 1-0 to 1-N through the bus 9-1. The service processor 20 performs state setting and state monitoring of the port unit 3, the memory controller 22, the priority control circuit 24, and the configuration control circuit 26. In this example, the service processor 20 performs various types of state setting on the port unit 3 through a control bus based on the JTAG specification. The service processor 20 reads the states of the port unit 3, the memory access controller 22, the priority control circuit 24, and the configuration control circuit 26 through the control bus based on the JTAG specification.

The port unit 3 in the system storage unit 2 is substantially the same as the one described above with reference to FIG. 2. Thus, as in the embodiment illustrated in FIG. 2, when no failure occurs, the commands and data received by the cluster interface circuit 30 are input to the selection circuit 44 and the history circuit 40. When no failure occurs, the selection circuit 44 selects the commands and data received by the cluster interface circuit 30 and outputs the commands and data to the pre-port circuit 34. The history circuit 40 logs the commands and data received by the cluster interface circuit 30 and the commands of the priority control circuit 24 and the configuration control circuit 26.

In the second embodiment, when the service processor 20 detects a failure in the port units 3 in the system storage unit 2, the failure is displayed on a display for the service processor 20. An operator may enter a read mode via the input device, such as the keyboard, for the service processor 20. The service processor 20 performs read setting on the history circuit 40 and the SSU-tester circuit 42 in the port circuit 32 through the control bus based on the JTAG specification.

In accordance with the read setting, the SSU-tester circuit 42 switches a selection output from the output from the history circuit 40 or the output of the SSU-tester circuit 42 to the selection circuit 44. When the read setting is for the history circuit 40, the history circuit 40 reads the logged commands and data and outputs the read commands and data to the pre-port circuit 34 via the selection circuit 44 under the control of the SSU-tester circuit 42.

When the read setting is for the SSU-tester circuit 42, the SSU-tester circuit 42 outputs a predetermined command and data to the pre-port circuit 34 via the selection circuit 44.

Thus, the pre-port circuit 34, the MAC interface circuit 36A, the PRIO interface circuit 36B, the CNFG interface circuit 36C, the memory access controller 22, the priority control circuit 24, and the configuration control circuit 26 operate in accordance with the commands and data read by the history circuit 40. This arrangement makes it possible to reproduce a failure in the port unit 2.

The service processor 20 scans a register and the internal circuit in the port unit 3, the memory access controller 22, the priority control circuit 24, and the configuration control circuit 26 and collects the state information through the control bus based on the JTAG specification. The service processor 20 may collect history information of the memory access controller 22, the priority control circuit 24, and the configuration control circuit 26 through the control bus based on the JTAG specification.

An operator or maintenance personnel may analyze a cause of a failure on the basis of the state information collected by the service processor 20. Thus, when a failure occurs, the failure in the port unit may be reproduced based on the logged commands and data. Thus, the above arrangements may be advantageous to enhance the precision of analysis and to reduce the time of analysis. According to the above embodiments, a timing failure may be easily reproduced as described below.

(Other Embodiments)

Although three write modes may be selected in the embodiments described above, one, two or more than three of the write modes may be provided. Although an example in which the service processor 20 uses a signal based on the JTAG specification to issue the write and read instructions has been described above, other control signal lines and signals, such as those based on an I2C (Inter Integrated Circuit) standard may also be used. In addition, in the configurations illustrated in FIGS. 1 and 14, the SSU may be duplexed. In such a case, one SSU having a failed port is disconnected from the clusters and another SSU continuously performs, for example, load/store of data of the clusters.

Although the present invention has been described above in conjunction with the particular embodiments, various modifications and changes can be made thereto without departing from the spirit and scope of the present invention and the present invention does not exclude such modifications and changes from the scope of the present invention.

## Claims

1. An information processing system that processes received commands and data, the information processing system comprising:
an internal circuit that processes the received commands and data;
a memory that stores the received commands and data as history; and
a control circuit that reads the commands and data in the memory and outputs read commands and data to the internal circuit, in response to detection of a failure in the internal circuit.

2. The information processing system according to claim 1, further comprising:
a processing circuit that detects the failure in the internal circuit and that issues a read instruction to the control circuit.

3. The information processing system according to claim 1 or 2, further comprising:
an interface circuit that is connected to an information processing apparatus, receives the commands and data from the information processing apparatus, and outputs the received commands and data to the internal circuit and the memory.

4. The information processing system according to claim 1, 2 or 3, further comprising:
a write circuit that extracts, of the received commands and data, at least the commands and invalid data indicating an interval of the commands and writes the commands and the invalid data to the memory; and
a read circuit that reads the commands and the invalid data in the memory and outputs the commands at an interval of the reception, in response to an instruction from the control circuit.

5. The information processing system according to claim 2, wherein the processing circuit detects a state of the internal circuit after outputting commands and data to the internal circuit.

6. The information processing system according to claim 4, further comprising:
a processing circuit that detects a failure in the internal circuit and that issues an instruction for a write mode and a read mode to the control circuit.

7. The information processing system according to claim 4, wherein the write circuit extracts the commands of the internal circuit and writes the extracted commands to the memory.

8. The information processing system according to any of claims 1 to 7, wherein the internal circuit, the memory, and the control circuit are provided in a system storage unit that is coupled to an information processing apparatus, receives the commands and data from the information processing apparatus and accesses a storage unit.

9. The information processing system according to any of claims 1 to 8, further comprising:
a selection circuit controlled by the control circuit to select whether the received commands and data are to be output to the internal circuit or the commands and data are to be output from the memory.

10. A failure processing method for an information processing system that processes received commands and data, the method comprising:
processing the received commands and data by an internal circuit;
storing the received commands and data in a memory as history; and
reading the commands and data in the memory and outputting the read commands and data to the internal circuit, in response to detection of a failure in the internal circuit.

11. The failure processing method according to claim 10, further comprising:
detecting the failure in the internal circuit by a processing circuit; and
issuing a read instruction to the control circuit by the processing circuit.

12. The failure processing method according to claim 10 or 11, further comprising:
receiving the commands and data from the information processing apparatus by an interface circuit that is connected to an information processing apparatus; and
outputting the received commands and data to the internal circuit and the memory by the interface circuit.

13. The failure processing method according to claim 10, 11 or 12, further comprising:
extracting, from the received commands and data, at least the commands and invalid data indicating an interval of the commands by a write circuit;
writing the commands and the invalid data to the memory by the write circuit;
reading the commands and the invalid data in the memory by a read circuit; and
outputting ,by the read circuit, the commands at an interval of the reception, in response to an instruction from the control circuit.

14. The failure processing method according to claim 13, further comprising:
detecting a failure in the internal circuit by a processing circuit; and
issuing an instruction for a write mode and a read mode to the control circuit by a processing circuit.

15. The failure processing method according to any of claims 10 to 14, further comprising:
selecting, by a selection circuit which is controlled by the control circuit, whether the received commands and data are to be output to the internal circuit or the commands and data are to be output from the memory.
